# EUROPÄISCHE PATENTANMELDUNG

(11) **EP 4 074 156 A1**
(43) Veröffentlichungstag der Anmeldung: **19.10.2022**
(21) Anmeldenummer: 22167278.5
(22) Anmeldetag: 08.04.2022
(51) Int. Cl.: A01B 59/042, A01B 59/00, B60D 1/167, B60D 1/46

(54) **DEICHSELANORDNUNG FÜR EINE GEZOGENE LANDMASCHINE**

(30) Priorität: 16.04.2021 DE 102021109633
(71) Anmelder: Maschinenfabrik Bernard Krone GmbH & Co. KG, 48480 Spelle (DE)
(72) Erfinder: Krimpmann, Hendrik, 48493 Wettringen (DE); Renken, Kiren, 49479 Ibbenbüren (DE)

(57) **Zusammenfassung**

Die Erfindung betrifft eine Deichselanordnung (5) für eine gezogene Landmaschine (1), mit einer Knickdeichsel (9), die bezüglich einer Längsrichtung (X) vorne ein Kupplungsteil (13) zum Ankoppeln an einen Schlepper aufweist, einem Rahmenelement (6), gegenüber dem die Knickdeichsel (9) um eine in einer Querrichtung (Y) verlaufende Knickachse (A) schwenkbar ist, sowie wenigstens zwei beiderseits einer zur Querrichtung (Y) senkrechten Längsmittelebene (M) der Knickdeichsel angeordneten Stellelementen (15), von denen jedes über ein hinteres Stellelementlager (16) mit dem Rahmenelement (6) und über ein vorderes Stellelementlager (17) mit der Knickdeichsel (9) verbunden und dazwischen längenverstellbar ist, um die Knickdeichsel (9) zu schwenken. Um eine Knickdeichsel für eine gezogene Landmaschine bereitzustellen, die sowohl eine optimale Kraftübertragung als auch einen geringen Wendekreis ermöglicht, ist erfindungsgemäß vorgesehen, dass eine vom hinteren Stellelementlager (16) zum vorderen Stellelementlager (17) verlaufende Stellelementachse (B) des jeweiligen Stellelements (15) in einem Stellelement-Neigungswinkel (α) auf die Längsmittelebene (M) zuläuft.

## Beschreibung

Die vorliegende Erfindung betrifft eine Deichselanordnung für eine gezogene Landmaschine, nach dem Oberbegriff von Anspruch 1 sowie eine gezogene Landmaschine nach dem Oberbegriff von Anspruch 10.

In der Landwirtschaft werden neben selbstfahrenden Arbeitsmaschinen in großem Umfang gezogene Maschinen eingesetzt. Hierzu zählen beispielsweise bestimmte Typen von Ballenpressen, Ladewagen oder Heuwendern. Die gezogene Landmaschine verfügt über keinen eigenen Antrieb und wird mittels einer Deichsel an ein Zugfahrzeug bzw. einen Schlepper angehängt. Die Deichsel weist ein Kupplungsteil (Zugmaul oder dergleichen) auf, welches mit einer entsprechenden Anhängerkupplung des Schleppers verbunden werden kann. Die Deichsel ist an einem Rahmenelement (z.B. an einem Rahmenrohr) der Landmaschine befestigt. Antriebskraft für bewegliche Teile der Landmaschine wird meist über eine mittig angeordnete Zapfwelle bereitgestellt. Diese ist oft in unmittelbarer Nähe der Deichsel angeordnet. Unter anderem, um Raum für die Zapfwelle zu lassen, kann die Deichsel zwei Schenkel aufweisen, die in Querrichtung beabstandet sind und zwischen denen die Zapfwelle hindurchgeführt ist.

Neben stationär am Rahmenelement befestigten Deichseln sind auch sog. Knickdeichseln verbreitet, die um eine in Querrichtung verlaufende Achse schwenkbar mit dem Rahmenelement verbunden sind. Durch Schwenken der Deichsel kann das Kupplungsteil nach Bedarf in unterschiedlicher Höhe angeordnet werden. Die Höhenverstellung erfolgt üblicherweise mit hydraulischen oder elektrohydraulischen Zylindern. Neben einer Anpassung an unterschiedlich hoch angeordnete Anhängerkupplungen verschiedener Schlepper ist es z.B. auch im Falle einer Ballenpresse möglich, die Deichsel abzusenken, um das Austauschen eines Bindemittels zu erleichtern, oder durch Absenken der Deichsel den vorderen Bereich der gezogenen Landmaschine anzuheben, z.B. um eine größere Bodenfreiheit für eine zwischenzeitlich angehobene Pick-up zu gewinnen oder um steile Feldeinfahrten o.Ä. durchfahren zu können. Schließlich können über die Zylinder und hydraulische Speicher dynamisch auftretende Belastungen, z.B. beim Durchfahren von Schlaglöchern, reduziert werden.

Zur Aufnahme der zwischen Schlepper und gezogener Landmaschine in Querrichtung wirkenden Kräfte ist es vorteilhaft, die Anbindungspunkte der Deichsel am Rahmenelement möglichst weit nach außen anzuordnen. Dies führt allerdings zu einer breiten Deichsel, so dass beim Wenden der kurveninnere Hinterreifen des Schleppers mit der Deichsel kollidieren kann. Dieses Problem besteht selbstverständlich bei besonders engen Kurven, z.B. beim Durchfahren eines Vorgewendes. Zur Realisierung eines engen Wendekreises ist daher eine möglichst schmale Deichsel vorteilhaft, was im Widerspruch zu der o.g. Anforderung steht.

Aufgabe der Erfindung ist es, eine Knickdeichsel für eine gezogene Landmaschine bereitzustellen, die sowohl eine optimale Kraftübertragung als auch einen geringen Wendekreis ermöglicht.

Die Aufgabe wird gelöst mit einer Deichselanordnung für eine gezogene Landmaschine, mit den Merkmalen des unabhängigen Patentanspruchs 1. Vorteilhafte Ausführungsformen sind den abhängigen Ansprüchen entnehmbar.

Dafür wird eine Deichselanordnung für eine gezogene Landmaschine geschaffen, mit einer Knickdeichsel, die bezüglich einer Längsrichtung vorne ein Kupplungsteil zum Ankoppeln an einen Schlepper aufweist, einem Rahmenelement, gegenüber dem die Knickdeichsel um eine in einer Querrichtung verlaufende Knickachse schwenkbar ist, sowie wenigstens zwei beiderseits einer zur Querrichtung senkrechten Längsmittelebene der Knickdeichsel angeordneten Stellelementen, von denen jedes über ein hinteres Stellelementlager mit dem Rahmenelement und über ein vorderes Stellelementlager mit der Knickdeichsel verbunden und dazwischen längenverstellbar ist, um die Knickdeichsel zu schwenken

Die Deichselanordnung ist für eine gezogene Landmaschine vorgesehen, also eine Landmaschine bzw. landwirtschaftliche Arbeitsmaschine, die dazu ausgebildet ist, gezogen zu werden. Entsprechend verfügt die Landmaschine über keinen eigenen Fahrantrieb. Die Landmaschine weist selbstverständlich eine Mehrzahl von Laufrädern auf, die normalerweise an einer Achse, ggf. auch an mehreren hintereinander angeordneten Achsen angeordnet, sind. Optional kann wenigstens eine Achse lenkbar sein. Zusätzlich zu den eigentlichen Laufrädern können Stützrollen bzw. Hilfsräder vorgesehen sein, durch die bspw. eine Pick-up abgestützt werden kann. Derartige Hilfsräder sind allerdings normalerweise nicht permanent in Bodenkontakt, sondern können z.B. bei Straßenfahrten angehoben werden. Es kann sich bei der Landmaschine bspw. um eine Mähmaschine, einen Wender oder Schwader, eine Erntemaschine wie eine Ballenpresse oder dergleichen handeln.

Die Deichselanordnung weist eine Knickdeichsel auf, die bezüglich einer Längsrichtung vorne ein Kupplungsteil zum Ankoppeln an einen Schlepper aufweist. Allgemein beziehen sich die Begriffe "Längsrichtung", "Querrichtung" und "Hochrichtung" in diesem Zusammenhang auf die Deichselanordnung. Soweit die Deichselanordnung allerdings nicht mit einer gelenkten Achse verbunden und somit um die Hochachse der Landmaschine schwenkbar ist, entsprechen diese Richtungen auch der Längsrichtung, Querrichtung und Hochrichtung der Landmaschine insgesamt. Die Knickdeichsel, die normalerweise in sich starr ausgebildet ist, weist (in Fahrtrichtung) vorne ein Kupplungsteil auf, bspw. eine Kugelpfanne, ein Kupplungsauge oder dergleichen, welches eine Ankopplung an einen Schlepper ermöglicht. Der Schlepper weist selbstverständlich eine komplementäre Anhängerkupplung auf. Es ist dabei natürlich auch möglich, dass der eigentliche Schlepper einen Anhänger zieht, der seinerseits eine Anhängerkupplung aufweist, an der das Kupplungsteil der Deichselanordnung angekoppelt wird. Selbstverständlich kann das eigentliche Kupplungsteil demontierbar bzw. abnehmbar ausgebildet sein.

Die Deichselanordnung weist ein Rahmenelement auf. Dieses ist in montiertem Zustand entweder kraftübertragend mit einem Rahmen der Landmaschine verbunden ist oder ist Teil eines solchen Rahmens. Insbesondere kann das Rahmenelement ein Rahmenrohr aufweisen oder als solches ausgebildet sein. Das Rahmenelement - sowie die Deichselanordnung insgesamt - ist normalerweise permanent mit dem Rest der Landmaschine verbunden, es könnte aber auch abnehmbar für ein vergleichsweise einfachen Austausch ausgelegt sein. Die Knickdeichsel ist schwenkbar mit dem Rahmenelement verbunden, wobei die zugehörige Schwenkachse hier als Knickachse bezeichnet wird und sich in Querrichtung erstreckt. Durch Schwenken der Knickdeichsel kann die Höhe des vorne angeordneten Kupplungsteils gegenüber dem Rahmenelement (sowie dem Rest der Landmaschine) verändert werden, bspw. um eine Anpassung an unterschiedlich hoch angeordnete Anhängerkupplungen zu ermöglichen.

Die Deichselanordnung weist außerdem wenigstens zwei beiderseits einer zur Querrichtung senkrechten Längsmittelebene der Knickdeichsel angeordneten Stellelemente auf, von denen jedes über ein hinteres Stellelementlager mit dem Rahmenelement und über ein vorderes Stellelementlager mit der Knickdeichsel verbunden und dazwischen längenverstellbar ist, um die Knickdeichsel zu schwenken. Die Längsmittelebene wird durch die Längsrichtung sowie durch die Hochrichtung aufgespannt und verläuft senkrecht zur Querrichtung. In aller Regel verläuft die Längsmittelebene durch das Kupplungsteil. Typischerweise ist die Knickdeichsel vollständig oder überwiegend symmetrisch zur Längsmittelebene ausgebildet. Es sind wenigstens zwei Stellelemente vorgesehen, wobei auf jeder Seite der Längsmittelebene wenigstens ein Stellelement angeordnet ist. Es sind Ausgestaltungen denkbar, bei denen auf wenigstens einer Seite der Längsmittelebene mehr als ein Stellelement angeordnet ist, normalerweise ist allerdings eines pro Seite ausreichend. Jedes Stellelement ist über ein hinteres Stellelementlager mit dem Rahmenelement und über ein vorderes Stellelementlager mit der Knickdeichsel verbunden und ist somit zwischen der Knickdeichsel und dem Rahmenelement zwischengeordnet. Die jeweiligen Stellelementlager sind normalerweise als Schwenklager mit wenigstens einem Freiheitsgrad ausgebildet. Das einzelne Stellelement ist zwischen den beiden Stellelementlagern längenverstellbar, wodurch der Abstand zwischen den Stellelementlagern wahlweise vergrößert oder verkleinert werden kann. Hierdurch wird ein Drehmoment auf die Knickdeichsel bezüglich der Knickachse ausgeübt. Das jeweilige Stellelement ist in aller Regel motorisch bzw. aktorisch verstellbar, so dass die Längenverstellung über einen Motor bzw. Aktor erfolgt. Insbesondere kann jedes Stellelement einen Aktor aufweisen oder als Aktor ausgebildet sein. Die Energie wird dem Aktor normalerweise seitens des Schleppers zugeführt, z.B. über eine Zapfwelle, eine hydraulische Leitung oder eine elektrische Leitung, welche den Schlepper und die gezogene Landmaschine verbinden.

Erfindungsgemäß läuft eine vom hinteren Stellelementlager zum vorderen Stellelementlager verlaufende Stellelementachse des jeweiligen Stellelements in einem Stellelement-Neigungswinkel auf die Längsmittelebene zu. Die Stellelementachse ist in diesem Zusammenhang allgemein eine Achse bzw. Linie, die durch die beiden Stellelementlager eines Stellelementes verläuft. Sie kann insbesondere auch der Richtung entsprechen, in der das Stellelement eine Kraft zwischen Rahmenelement und Deichsel überträgt. Da die Stellelementachse in jedem Fall auf die Längsmittelebene zuläuft, sind die Stellelementachsen auf entgegengesetzten Seiten der Längsmittelebene entgegengesetzt geneigt. Unter Umständen können sie (bzw. ihre gedachten Verlängerungen) einander in einem Bereich vor den vorderen Stellelementlagern schneiden. Bevorzugt sind die Stellelementachsen symmetrisch zur Längsmittelebene angeordnet. Gleiches gilt für die Stellelemente insgesamt.

Jede Stellelementachse verläuft von hinten nach vorne auf die Längsmittelebene zu. Entsprechend ist das vordere Stellelementlager näher an der Längsmittelebene angeordnet als das hintere Stellelementlager. Somit sind die hinteren Stellelementlager der auf unterschiedlichen Seiten angeordneten Stellelemente in Querrichtung weiter voneinander beabstandet, während die vorderen Stellelementlager in Querrichtung weniger weit beabstandet sind. Dementsprechend kann die Deichselanordnung weiter vorne (im Bereich der vorderen Stellelementlager) schmal ausgestaltet sein, während sie weiter hinten (im Bereich der hinteren Stellelementlager) breit ausgestaltet sein kann. Auf diese Weise wird hinten eine breite Anbindung geschaffen, die eine optimale Aufnahme und Übertragung von Kräften ermöglicht, während vorne eine schlanke Ausgestaltung der Deichselanordnung möglich ist, durch die bei Wendemanövern die Gefahr einer Kollision mit einem Hinterrad des Schleppers minimiert wird. Dementsprechend ist ein kleiner Wendekreis möglich. Außerdem sind bei Knickdeichseln im Stand der Technik, bei denen sowohl die Stellelemente als auch Seitenholme der Knickdeichsel parallel zur Längsmittelebene verlaufen, diese über ein in Querrichtung verlaufendes Element mit einem nach vorne verlaufenden Mittelholm verbunden. Ein solches quer verlaufendes Element muss in der Regel besonders stabil und somit schwer ausgestaltet sein, um die auftretenden Kräfte und insbesondere Biegemomente zwischen den in Längsrichtung verlaufenden Elementen übertragen zu können. Bei der erfindungsgemäßen Knickdeichsel kann u.U. auf ein derartiges Element verzichtet werden, so dass die Knickdeichsel leichter und konstruktiv einfacher ausgestaltet werden kann.

Vorteilhaft beträgt der Stellelement-Neigungswinkel wenigstens eines Stellelements zwischen 5° und 60°. Liegt der Stellelement-Neigungswinkel unter 5°, treten die oben beschriebenen Vorteile der erfindungsgemäßen Ausgestaltung gegenüber einer parallelen Ausrichtung der Stellelementachse zur Längsmittelebene kaum noch in Erscheinung. Liegt der Stellelement-Neigungswinkel über 60°, wird die Verstellung zunehmend ineffizient, da sich dann bezüglich der Knickachse erhebliche gegeneinander wirkende axiale Kraftkomponenten der beiderseits angeordneten Stellelemente ergeben, die zwar die Knickdeichsel seitlich stabilisieren können, allerdings nichts zur eigentlichen Verstellung um die Knickachse beitragen. Hiermit einhergehend nehmen die tangentialen Kraftkomponenten mit zunehmendem Stellelement-Neigungswinkel ab, was das Anheben oder Absenken der Knickdeichsel erschwert. Um den Bauraum zu optimieren und gleichzeitig die in den Stellelementen wirkenden Kräfte zu begrenzen, hat sich ein Stellelement-Neigungswinkel im Bereich von 5° - 35° als besonders vorteilhaft herausgestellt.

Bevorzugt weist jedes Stellelement einen entlang der Stellelementachse ausgerichteten Zylinder auf. U.U. kann das Stellelement auch als Zylinder ausgebildet sein. Es kann sich insbesondere um einen hydraulischen, elektrohydraulischen oder pneumatischen Zylinder handeln. Die Stellelementachse entspricht der Längsachse des Zylinders, man könnte auch sagen, der Zylinderachse. Der Zylinder kann entlang der genannten Achse expandieren oder sich zusammenziehen, bspw. in Abhängigkeit von der Druckbeaufschlagung der Hydraulikflüssigkeit.

Eine Ausgestaltung der Erfindung sieht vor, dass ein Abstand des vorderen Stellelementlagers von der Längsmittelebene zwischen 20% und 80% eines Abstands des hinteren Stellelementlagers von der Längsmittelebene entspricht. Durch die entsprechenden Abstände von der Längsmittelebene ist eine minimal mögliche Breite der Deichselanordnung in dem entsprechenden Bereich vorgegeben.

Außerdem ist es vorteilhaft, wenn ein Abstand des vorderen Stellelementlagers von der Knickachse zwischen 20 % und 60 % eines Abstands des Kupplungsteils von der Knickachse beträgt. Der Abstand des Kupplungsteil von der Knickachse kann im Wesentlichen mit der Gesamtlänge der Knickdeichsel gleichgesetzt werden. Der Abstand des vorderen Stellelementlager von der Knickachse bestimmt, wie weit vorne das zugehörige Stellelement an der Knickdeichsel ansetzt. Liegt der entsprechende Ansatzpunkt bei weniger als 20 % der Gesamtlänge, wird der Hebelarm im Allgemeinen zu ungünstig für ein effizientes Anheben und Absenken der Knickdeichsel, wenn z.B. die Höhenposition des Kupplungsteils zum Ankoppeln an den Schlepper angepasst wird. Liegt der Ansatzpunkt oberhalb von 60 %, steigt im Allgemeinen das Risiko einer Kollision mit einem Hinterrad des Schleppers.

Vorteilhaft weist die Knickdeichsel zwei beiderseits der Längsmittelebene angeordnete Seitenholme auf, die durch jeweils ein Deichsellager um die Knickachse schwenkbar mit dem Rahmenelement verbunden sind. Die beiden Seitenholme sind als Teile der Knickdeichsel direkt oder indirekt starr miteinander verbunden. Insbesondere können sie mit einem entlang der Längsmittelebene verlaufenden Mittelholm verbunden sein bzw. in diesen einmünden. Der Mittelholm kann dabei bezüglich der Längsrichtung vorne das Kupplungsteil aufweisen. Die Deichsellager liegen entlang der Knickachse und ermöglichen ein Schwenken der Seitenholme und somit der gesamten Knickdeichsel um die Knickachse. Zwischen den Seitenholmen kann bspw. eine Zapfwelle hindurchgeführt werden, über die die Landmaschine mit dem Schlepper verbunden ist.

Vorteilhaft läuft jeder Seitenholm ausgehend vom Deichsellager nach vorne wenigstens teilweise in einem Seitenholm-Neigungswinkel zwischen 5° und 60° auf die Längsmittelebene zu. D.h., die Seitenholme verlaufen nicht parallel zur Längsmittelebene, sondern in einem Winkel, der hier als Seitenholm-Neigungswinkel bezeichnet wird, so dass sie sich von hinten, im Bereich der Deichsellager, nach vorne der Längsmittelebene annähern. Die entsprechende Ausrichtung der Seitenholme kann auf deren gesamter Länge gegeben sein oder nur in einem Teilbereich. Z.B. könnte ein Seitenholm abgewinkelt ausgebildet sein, wobei er zunächst im Seitenholm-Neigungswinkel auf die Längsmittelebene zuläuft und im weiteren Verlauf parallel zu dieser verläuft. Wie bereits oben erwähnt, können die Seitenholme weiter vorne in einen Mittelholm münden bzw. mit diesem verbunden sein.

Des Weiteren können jeweils ein Stellelement und ein Seitenholm wenigstens teilweise in einer Hochrichtung übereinander angeordnet sein, wobei sich der Stellelement-Neigungswinkel und der Seitenholm-Neigungswinkel um höchstens 50° unterscheiden. Der Unterschied kann insbesondere auch weniger betragen, z.B. höchstens 30°, höchstens 15° oder höchstens 5°. D.h., in der Draufsicht überdecken sich Stellelemente und Seitenholme wenigstens teilweise, wobei sich ihre Neigungswinkel nur geringfügig oder auch gar nicht unterscheiden. Somit können sowohl Stellelement als auch Seitenholme eine Ausrichtung aufweisen, die hinsichtlich der Kraftübertragung zwischen Kupplungsteil und Rahmenelement sowie des Freiraums seitlich der Knickdeichsel als ideal angesehen wird.

Bei einer oben geschilderten Schrägstellung der Seitenholme verlaufen diese nicht senkrecht zur Knickachse, um welche die eigentliche Rotation stattfindet. Dabei kann es schwierig sein, mit einem einfachen Schwenklager mit einem Freiheitsgrad ein Verkanten während der Bewegung um die Knickachse zu verhindern. Ähnliche Überlegungen treffen auf die ebenfalls schräg stehenden Stellelemente zu. Aus diesem Grund ist bevorzugt wenigstens ein Deichsellager und/oder ein hinteres Stellelementlager als Gelenklager mit einer Mehrzahl von Freiheitsgraden ausgebildet. Das entsprechende Gelenklager erlaubt somit neben einer Rotation um eine Achse wenigstens eine weitere Bewegung, bspw. eine (wenn auch nur begrenzte) Rotation um eine weitere Achse oder eine translatorische Bewegung.

Die Aufgabe wird zudem gelöst durch eine gezogene Landmaschine mit den Merkmalen des unabhängigen Anspruchs 10. Diese weist eine Deichselanordnung auf, mit einer Knickdeichsel, die bezüglich einer Längsrichtung vorne ein Kupplungsteil zum Ankoppeln an einen Schlepper aufweist, einem Rahmenelement, gegenüber dem die Knickdeichsel um eine in einer Querrichtung verlaufende Knickachse schwenkbar ist, sowie wenigstens zwei beiderseits einer zur Querrichtung senkrechten Längsmittelebene der Knickdeichsel angeordneten Stellelementen, von denen jedes über ein hinteres Stellelementlager mit dem Rahmenelement und über ein vorderes Stellelementlager mit der Knickdeichsel verbunden und dazwischen längenverstellbar ist, um die Knickdeichsel zu schwenken.

Erfindungsgemäß läuft eine vom hinteren Stellelementlager zum vorderen Stellelementlager verlaufende Stellelementachse des jeweiligen Stellelements in einem Stellelement-Neigungswinkel auf die Längsmittelebene zu.

Die genannten Begriffe wurden bereits oben mit Bezug auf die erfindungsgemäße Deichselanordnung erläutert und werden daher nicht nochmals erklärt. Vorteilhafte Ausgestaltungen der erfindungsgemäßen Landmaschine entsprechen denen der erfindungsgemäßen Deichselanordnung.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine Seitenansicht einer Ballenpresse mit einer erfindungsgemäßen Deichselanordnung;
- Fig. 2: eine Draufsicht eines Teils der Ballenpresse aus Fig.1; sowie
- Fig. 3: eine perspektivische Darstellung eines Teils der Ballenpresse aus Fig.1.

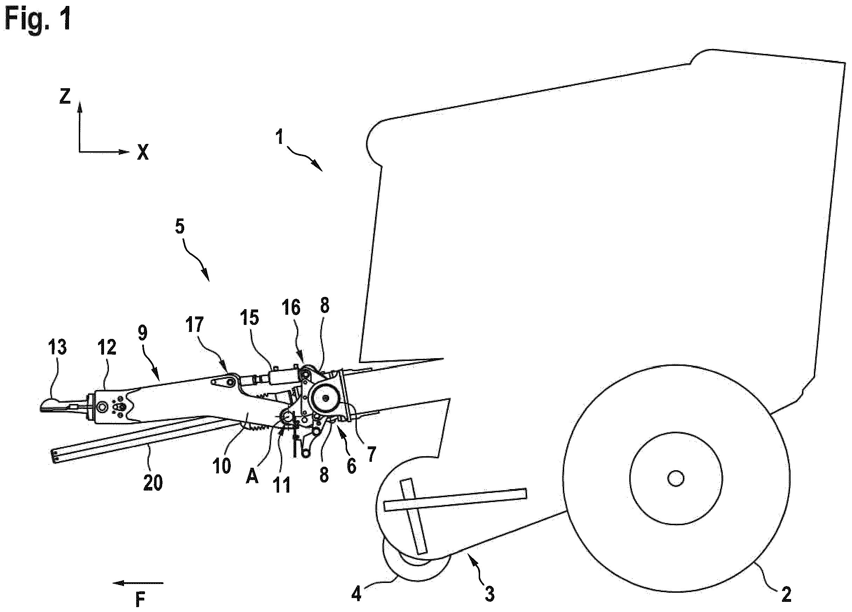

Fig. 1 zeigt eine Seitenansicht einer gezogenen Landmaschine, genauer gesagt einer hier nur umrisshaft dargestellten Ballenpresse 1. Im vorliegenden Fall weist die Ballenpresse 1 eine einzige Achse mit zwei Laufrädern 2 auf, was jedoch nur beispielhaft ist. Bezüglich einer Fahrtrichtung F vor den Laufrädern 2 ist eine Pick-up 3 mit Hilfsrädern 4 angeordnet. Diese kann (bspw. bei Straßenfahrt) angehoben werden, so dass die Hilfsräder 4 keine Bodenkontakt haben. Die Ballenpresse 1 wird zum Betrieb mittels einer Knickdeichsel 9 an einen hier nicht dargestellten Schlepper angekoppelt. Zu diesem Zweck weist die Knickdeichsel 9 bezüglich einer Längsrichtung X vorne (also in Fahrtrichtung F vorderseitig) ein Kupplungsteil 13 (z.B. eine Kugelpfanne) auf, über welches die mechanische Zugkraft des Schleppers übertragen wird. Zur Übertragung einer mechanischen Antriebskraft an verschiedene Komponenten der Ballenpresse 1, welche hier nicht im Detail besprochen werden, ist zudem eine Zapfwelle 20 vorgesehen. Die Knickdeichsel 9 ist zusammen mit einem Rahmenelement 6 Teil einer erfindungsgemäßen Deichselanordnung 5. Im vorliegenden Fall weist das Rahmenelement 6 ein in einer Querrichtung Y verlaufendes Rahmenrohr 7 sowie eine Mehrzahl von Halterungen 8 auf, welche an das Rahmenrohr 7 angeschweißt sind. Das Rahmenelement 6 ist Teil eines Rahmens der Ballenpresse 1 bzw. starr an diesem befestigt. Die Knickdeichsel 9 ist gegenüber dem Rahmenelement 6 um eine Knickachse A schwenkbar, welche in Querrichtung Y verläuft.

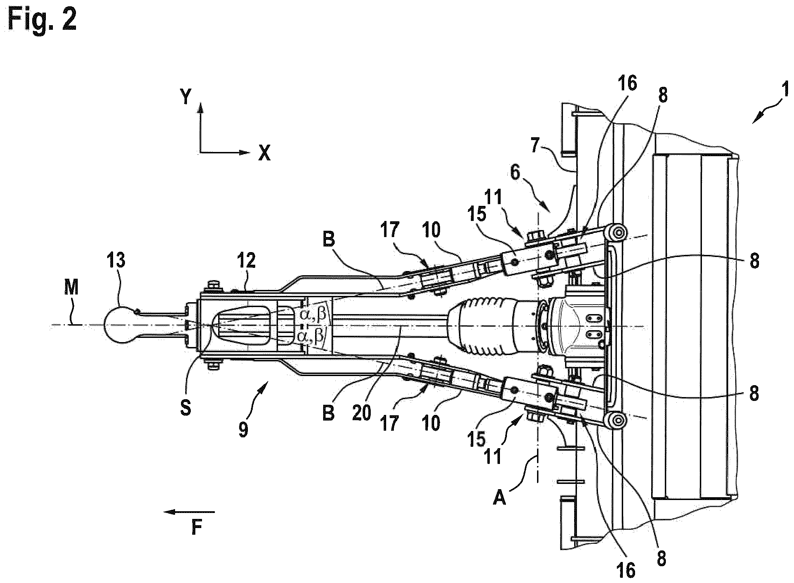

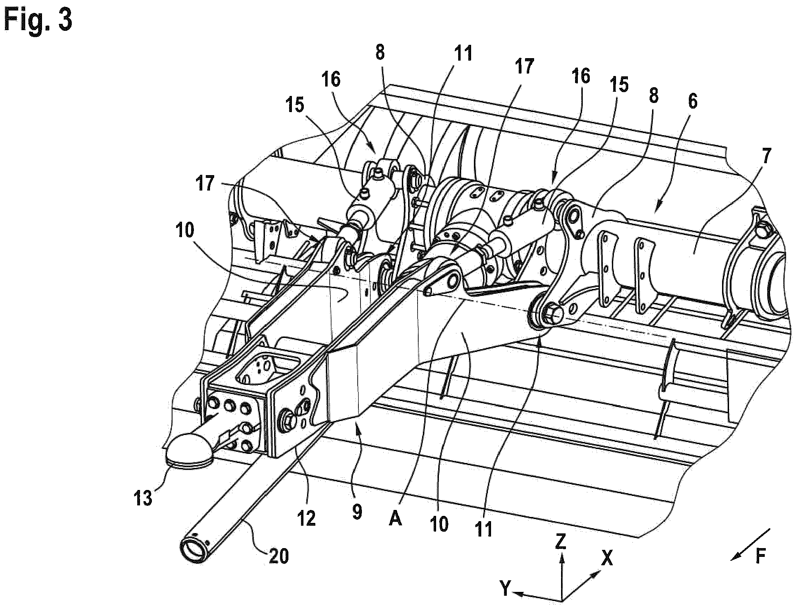

Wie insbesondere auch in der Draufsicht in Fig. 2 sowie in der perspektivischen Ansicht in Fig. 3 erkennbar ist, weist die Knickdeichsel 9 einen Mittelholm 12 auf, an dem vorne das Kupplungsteil 13 angeordnet ist, sowie zwei von dem Mittelholm 12 ausgehende Seitenholme 10, von denen sich jeder bis zu einem Deichsellager 11 an der Knickachse A erstreckt. Die Knickdeichsel 9 sowie die gesamte Deichselanordnung 5 sind spiegelsymmetrisch zu einer Längsmittelebene M ausgebildet, welche durch die Längsrichtung X sowie einer Hochrichtung Z aufgespannt ist. Die Längsrichtung X, die Querrichtung Y sowie die Hochrichtung Z bilden allgemein ein Bezugssystem der Deichselanordnung 5, sind allerdings in Fig. 1 - 3 identisch mit der Fahrzeuglängsrichtung, -querrichtung sowie -hochrichtung der Ballenpresse 1.

Um die Schwenkbarkeit der Knickdeichsel 9 zu realisieren, sind beiderseits der Längsmittelebene M zwei Stellelemente 15 vorgesehen, welche in diesem Fall als Hydraulikzylinder ausgebildet sind. Jedes Stellelement 15 ist über ein hinteres Stellelementlager 16 mit einer Halterung 8 des Rahmenelements 6 verbunden sowie über einen vorderes Stellelementlager 17 mit der Knickdeichsel 9, genauer gesagt mit einem der Seitenholme 10. Dabei ist jedes Stellelement 15 entlang einer Stellelementachse B ausgerichtet, die nach vorne in einem Stellelement-Neigungswinkel α auf die Längsmittelebene M zuläuft und in einem Schnittpunkt S schneidet. In diesem Beispiel beträgt der Stellelement-Neigungswinkel α ca. 10°. Wie insbesondere in der Draufsicht von Fig. 2 erkennbar ist, verlaufen die Seitenholme 10 ebenfalls schräg zur Längsmittelebene M, und zwar in einem Seitenholm-Neigungswinkel β, der in diesem Beispiel identisch mit dem Stellelement-Neigungswinkel α ist. Entlang der Hochrichtung Z liegen die Stellelemente 15 wenigstens überwiegend oberhalb der Seitenholme 10.

Wenn die Knickdeichsel 9 in ihrer Höhe verstellt werden soll, wird hydraulisch eine Längenverstellung der beiden Stellelemente 15 ausgelöst, wodurch sich der Abstand der vorderen und hinteren Stellelementlager 16, 17 verändert. Entsprechend wird bei einer Verkürzung der Stellelemente 15 die Knickdeichsel 9 angehoben und bei einer Verlängerung abgesenkt. Der Abstand der vorderen Stellelementlager 17 von der Knickachse A beträgt ca. 30 % des Abstands des Kupplungsteils 13 von der Knickachse A, wodurch sich ein ausreichender Hebelarm zur kontrollierten Bewegung der Knickdeichsel 9 ergibt. Da die hydraulische Kraft des jeweiligen Stellelements 15 in Richtung der Stellelementachse B wirkt, ergibt sich bezüglich der Knickachse A eine axiale Kraftkomponente, die für den Verstellvorgang an sich unnötig ist, allerdings durch eine entsprechende, entgegengesetzte Kraftkomponente des anderen Stellelements 15 kompensiert wird.

Von besonderem Vorteil ist, dass durch die Schrägstellung der Stellelemente 15 die Deichselanordnung 5 trotz einer in Querrichtung breiten Basis im Bereich der Knickachse A nach vorne hin deutlich schlanker ausgestaltet ist. Dabei beträgt der Abstand eines vorderen Stellelementlagers 17 von der Längsmittelebene M vorliegend ca. 60 % des Abstands des hinteren Stellelementlagers 16 von der Längsmittelebene M. Hierdurch wird bei einem Wendemanöver mit engem Wendekreis, bei dem die Ausrichtung des Schleppers deutlich von der Ausrichtung der Ballenpresse 1 abweicht, die Gefahr vermindert, dass ein Hinterrad des Schleppers mit der Deichselanordnung 5 kollidiert.

## Patentansprüche

1. Deichselanordnung (5) für eine gezogene Landmaschine (1), mit einer Knickdeichsel (9), die bezüglich einer Längsrichtung (X) vorne ein Kupplungsteil (13) zum Ankoppeln an einen Schlepper aufweist, einem Rahmenelement (6), gegenüber dem die Knickdeichsel (9) um eine in einer Querrichtung (Y) verlaufende Knickachse (A) schwenkbar ist, sowie wenigstens zwei beiderseits einer zur Querrichtung (Y) senkrechten Längsmittelebene (M) der Knickdeichsel angeordneten Stellelementen (15), von denen jedes über ein hinteres Stellelementlager (16) mit dem Rahmenelement (6) und über ein vorderes Stellelementlager (17) mit der Knickdeichsel (9) verbunden und dazwischen längenverstellbar ist, um die Knickdeichsel (9) zu schwenken,
**dadurch gekennzeichnet, dass**
eine vom hinteren Stellelementlager (16) zum vorderen Stellelementlager (17) verlaufende Stellelementachse (B) des jeweiligen Stellelements (15) in einem Stellelement-Neigungswinkel (α) auf die Längsmittelebene (M) zuläuft.

2. Deichselanordnung nach Anspruch 1, **dadurch gekennzeichnet, dass** der Stellelement-Neigungswinkel (α) wenigstens eines Stellelements (15) zwischen 5° und 60° beträgt.

3. Deichselanordnung nach einem der vorangehenden Ansprüche, **dadurch gekennzeichnet, dass** jedes Stellelement (15) einen entlang der Stellelementachse (B) ausgerichteten Zylinder aufweist.

4. Deichselanordnung nach einem der vorangehenden Ansprüche, **dadurch gekennzeichnet, dass** ein Abstand des vorderen Stellelementlagers (17) von der Längsmittelebene (M) zwischen 20% und 80% eines Abstands des hinteren Stellelementlagers (16) von der Längsmittelebene (M) entspricht.

5. Deichselanordnung nach einem der vorangehenden Ansprüche, **dadurch gekennzeichnet, dass** ein Abstand des vorderen Stellelementlagers von der Knickachse zwischen 20 % und 60 % eines Abstands des Kupplungsteils von der Knickachse beträgt.

6. Deichselanordnung nach einem der vorangehenden Ansprüche, **dadurch gekennzeichnet, dass** die Knickdeichsel (9) zwei beiderseits der Längsmittelebene (M) angeordnete Seitenholme (10) aufweist, die durch jeweils ein Deichsellager (11) um die Knickachse (A) schwenkbar mit dem Rahmenelement (6) verbunden sind.

7. Deichselanordnung nach einem der vorangehenden Ansprüche, **dadurch gekennzeichnet, dass** jeder Seitenholm (10) ausgehend vom Deichsellager (11) nach vorne wenigstens teilweise in einem Seitenholm-Neigungswinkel (β) zwischen 5° und 60° auf die Längsmittelebene (M) zuläuft.

8. Deichselanordnung nach einem der vorangehenden Ansprüche, **dadurch gekennzeichnet, dass** jeweils ein Stellelement (15) und ein Seitenholm (10) wenigstens teilweise in einer Hochrichtung (Z) übereinander angeordnet sind, wobei sich der Stellelement-Neigungswinkel (α) und der Seitenholm-Neigungswinkel (β) um höchstens 50° unterscheiden.

9. Deichselanordnung nach einem der vorangehenden Ansprüche, **dadurch gekennzeichnet, dass** wenigstens ein Deichsellager (11) und/oder ein hinteres Stellelementlager (16) als Gelenklager mit einer Mehrzahl von Freiheitsgraden ausgebildet ist.

10. Gezogene Landmaschine (1), insbesondere nach einem der vorherigen Ansprüche, aufweisend eine Deichselanordnung (5), mit einer Knickdeichsel (9), die bezüglich einer Längsrichtung (X) vorne ein Kupplungsteil (13) zum Ankoppeln an einen Schlepper aufweist, einem Rahmenelement (6), gegenüber dem die Knickdeichsel (9) um eine in einer Querrichtung (Y) verlaufende Knickachse (A) schwenkbar ist, sowie wenigstens zwei beiderseits einer zur Querrichtung (Y) senkrechten Längsmittelebene (M) der Knickdeichsel angeordneten Stellelementen (15), von denen jedes über ein hinteres Stellelementlager (16) mit dem Rahmenelement (6) und über ein vorderes Stellelementlager (17) mit der Knickdeichsel (9) verbunden und dazwischen längenverstellbar ist, um die Knickdeichsel (9) zu schwenken,
**dadurch gekennzeichnet, dass**
eine vom hinteren Stellelementlager (16) zum vorderen Stellelementlager (17) verlaufende Stellelementachse (B) des jeweiligen Stellelements (15) in einem Stellelement-Neigungswinkel (α) auf die Längsmittelebene (M) zuläuft.
